Europäisches Patentamt

European Patent Office

Office européen des brevets

(19)

(11) Publication number: **0 015 145**
**B1**

(12) # EUROPEAN PATENT SPECIFICATION

(45) Date of publication of patent specification: **25.01.84**       (51) Int. Cl.³: **C 08 L 67/02**

(21) Application number: **80300494.4**

(22) Date of filing: **21.02.80**

(54) **Polyester compositions and processes for moulding them.**

(30) Priority: **23.02.79 US 14404**

(43) Date of publication of application:
**03.09.80 Bulletin 80/18**

(45) Publication of the grant of the patent:
**25.01.84 Bulletin 84/4**

(84) Designated Contracting States:
**BE CH DE FR GB IT NL**

(56) References cited:
**DE - A - 2 348 377**
**FR - A - 2 380 324**

(73) Proprietor: **Rohm and Haas Company**
**Independence Mall West**
**Philadelphia, Pennsylvania 19105 (US)**

(72) Inventor: **Work, William James**
**516 Orlando Avenue**
**Oreland Pennsylvania, 19073 (US)**

(74) Representative: **Angell, David Whilton et al,**
**Rohm and Haas Company Patent Department**
**Chesterfield House Bloomsbury Way**
**London WC1A 2TP (GB)**

Courier Press, Leamington Spa, England.

Polyester compositions and processes for moulding them

This invention is concerned with polyester compositions and processes for moulding them. The field of this invention is the improvement of the crystallization rate and moulding behaviour of polyesters, in particular poly(alkylene terephthalate).

The use of inert particulate nucleating agents to promote crystallization of poly(alkylene terephthalate) is very well known. Mold temperatures of at least 120°C and optimumly 140°C in the case of poly(ethylene terephthalate) (PET) have generally been necessary for injection molded engineering applications. In the case of PET, because of its low rate of crystallization at desirable molding temperatures of less than 100°C, it has not attained widespread use as an engineering plastic. When PET is molded with conventional nucleating agents at temperatures below 100°C, it generally has poor physical properties, surface appearance and dimensional stability due to insufficient crystallization.

Various attempts have been made to improve the crystallization rate of PET. For example, the use of poly(ethylene oxide) or poly(propylene oxide) having hydroxyl functionality has been suggested in combination with nucleating agents; however, this method is undesirable because the PET reacts with the hydroxyl functionality to give a resin with lower molecular weight and poorer physical properties. The use of low molecular weight inert organic solvents such as beznophenone and phthalate plasticizers such as dioctyl phthalate have been suggested, but the use of such plasticizers alone is not desirable because they cause processing difficulties due to their high volatility under drying or processing conditions for PET, and tend to migrate to the surface of a molded specimen. Solvents such as dibutyl tin dilaurate have been suggested, but these are toxic materials and would be undesirable. U.S. Patent 3,516,957 teaches (alkylene terephthalates) with "a small percentage of an ester of an organic acid having from 10 to 27 carbon atoms and an alcohol having from 1 to 10 carbon atoms, e.g., methyl stearate or pentaerythritol tetrastearate, with the "cojoint presence of a synergistic agent such as an alkali metal salt or alkaline earth metal salt of an organic acid having 10 to 25 carbon atoms, e.g., sodium stearate; talc, and asbestos". The Flory interaction parameter for pentaerithritol tetrastearate is 0.42, and for methyl stearate is 0.48.

FR—A—2380324 is concerned with mouldable thermoplastic polyester compositions containing polyalkylene terephthalate and an oligomeric ester of phthalic acid and, optionally particulate nuclearing agent. There is however no disclosure that the oligomeric polyester contain aliphatic resides and we have unexpectedly found that since this affects the Flory Interaction Parameter it influences the compatibility of the oligomeric polyester with the poly(alkylene terephthalate).

We have now found a process and composition which can be used to enable polyesters such as PET to be molded at mold temperatures below 100°C to obtain highly crystalline parts even in thin sections the crystallization rate of the polyester being enhanced in the composition to enable this. The composition aspect of the invention can further provide polyester molding compositions which do not need to contain highly volatile solvents which tend to migrate to the surface of moldings.

The compositions of the invention comprise (i) thermoplastic polyester of aliphatic diol and di-dicarboxylic acid, at least 95 mole % of said acid being terephthalic acid, (ii) inert particulate nucleating agent, and (iii) oligomeric polyester as crystallization promoter, said oligomeric polyester being of organic dicarboxylic acid having 2 to 8 carbon atoms and which is either exclusively aliphatic or is a mixture of aliphatic and aromatic and organic polyol and having a Flory Interaction Parameter with said polyester (i) below or equal to 0.2. Although any linear thermoplastic polyester as described above can be used in the present invention, the preferred thermoplastic polyesters are PET or blends of PET with other thermoplastic polyesters. The invention is thus also applicable for example to poly(butylene terephthalate) (PBT), poly(propylene terephthalate) poly(hexylene terephthalate), poly(cyclohexylene terephthalate) and poly(cyclohexyl dimethylene terephthalate), or blends of these materials. Thermoplastic polyesters which comprise structural units derived from terephthalic acid and up to 5 mole percent of other aromatic or aliphatic dicarboxylic acids such as isophthalic, naphthalene-2,6-dicarboxylic acid or adipic acid are also suitable. The alcohol component of the thermoplastic polyester is preferably a single aliphatic diol but may also contain up to 30 mole percent of one or more other aliphatic diols. The invention is also applicable to polyesters derived from substituted acids such as hydroxy carboxylic acids in the amounts permitted above. Any two or more of these thermoplastic polyesters can be blended. For the sake of convenience hereafter these polyesters will be discussed largely in terms of PET or poly(alkylene terephthalate).

The poly(alkylene terephthalate) polyesters used as starting compounds preferably have an intrinsic viscosity of 0.4 to 1.4 grams per deciliter, and more preferably 0.6 to 0.8 grams per deciliter. For these purposes, the intrinsic viscosity is measured before extrusion in a 1% solution of phenol and tetrachloroethane, 60:40 at 25°C.

The inert particulate nucleating agent can be talc, kaolin, calcium carbonate, aluminum oxide, titanium dioxide, silica and/or graphite. Suitable amounts of nucleating agent to be used include .01 to 5% by weight, based on poly(alkylene terephthalate). The nucleating agent is preferably a mixture of two or more inert particulate materials of which graphite is one. When talc is used as the nucleating

2

agent it preferably has a particle size of less than 2 microns and any graphite used preferably has a particle size less than or equal to 5 microns.

The oligomeric polyesters which have been found to be most useful in this invention have a preferred molecular weight, $M_w$, of 700 to 10,000. They must however have a Flory Interaction Parameter less than or equal to 0.2 with the poly(alkylene terephthalate), and be derived from organic dicarboxylic acid having 2 to 8 carbon atoms and organic polyol. Preferred oligomers also are derived from dicarboxylic acid and aliphatic glycol. The dicarboxylic acid can be a mixture of aliphatic and aromatic acids or is exclusively aliphatic. The more preferred molecular weight is 900 to 5000, and when the acid is exclusively aliphatic, it is preferred that the oligomeric polyester have a molecular weight above 2000. Preferably the polyol is a glycol and has 2 to 15 carbon atoms. The oligomeric polyester can be terminated with either a fatty acid or an aliphatic alcohol preferably having 7 to 15 carbon atoms, or it can be unterminated. The oligomeric polyester can also include an aromatic glycol. The hydroxyl number of the oligomeric polyester should preferably be less than 50 mg/g and more preferably less than 10 mg/g to prevent degradation of the poly(alkylene terephthalate) during melt processing or long term use at elevated temperatures. One suitable method for preparation of suitable oligomeric polyesters is disclosed by VanHook in U.S. patent 3,284,399. Several particular highly preferred oligomeric polyesters are as follows:

Decyl terminated {ethylene adipate/phthalate (1/1)} 2.0
Isodecyl terminated {ethylene adipate/phthalate (1/2)} 2.7
Octyl/decyl (1/1) terminated {ethylene adipate/phthalate (1/2)} 2.2
$C_{14}$ fatty acid terminated poly(propylene adipate)
2-ethyl hexyl terminated poly(butylene adipate)
Poly{propylene adipate/phthalate (3/1)}, $M_w$=1200
Poly{propylene adipate/isophthalate (3/1)}, $M_w$=2000

The amount of oligomeric polyester which is generally used in the compositions is 0.1 to 10% by weight of the three components.

Other additives may optionally be present in the compositions of the invention. Up to 50% by weight of the total composition of mineral fillers, fibrous reinforcement such as glass fibers, flame retardants, colorants, stabilizers, water scavengers, processing aids, and core/shell impact modifiers can be included. The impact modifiers used are preferably among the ones disclosed in Dutch patent application 77/06327; Australian 25992/77 (515555); U.S. patent 3,864,428; and/or U.S. patent 3,919,353. Furthermore, up to 8% of an aromatic polycarbonate prepared by the reaction of phosgene with 2,2-(4,4'-dihydroxydiphenyl)-propane(bis phenol A) can be included to improve the impact strength.

Also, polyester-polyether elastomers can also be included in the composition as disclosed in our copending European Application No. 0015146 filed on the same date as this Application and claiming priority from U.S. Application 014405 filed 23 February 1979, the specification of which fully describes the suitable polyester-polyether elastomers.

The compositions may be blended by tumbling the dry components together and melt blending by methods well known to those skilled in the art. The preferred method is extrusion on a single or twin screw extruder.

It is surprising that the combination of the at least partially aliphatic oligomeric polyester and nucleating agent together gives such improvement to the crystallization rate of poly(alkylene terephthalate), especially PET. It is particularly surpising to find that the high molecualr weight oligomeric polyesters not only increase the crystallization rate of the poly(alkylene terephthalate), but they may actually increase it more than lower molecular weight organic solvents used at equal concentrations, contrary to the usual expectation for materials which perform as plasticizers. Normally, low molecular weight plasticizers show better compatibility and better performance than high molecular weight plasticizers in PVC. It is also surprising that further improvements to the crystallization behavior and moldability may be obtained using the combination of graphite and talc. Graphite has been named as a nucleating agent for PET by others, but it is surprising that it would cause a further improvement of the crystallization behavior of PET in the presence of another nucleating agent.

In this Specification and Claims appropriate ester forming or transesterifiable derivatives of acids and alcohols are intended to be embraced by the disclosure of the acids and alcohols themselves. For example, anhydrides may often be used instead of acids in the formation of esters.

The following examples are presented to illustrate some embodiments of the invention, the preparation of components thereof and some comparative compositions. All parts and percentages are by weight unless otherwise indicated.

Examples

Measurements of crystallization rates, percentage crystallinity, nucleation temperatures ($T_n$), and crystallization temperatures ($T_c$) were all performed by differential thermal analysis. Crystallization rates were determined isothermally at 100°C on quenched samples of molten PET. The rate of crystallization is expressed as crystallization half-time, $t_{1/2}$, which is the time necessary for 50% of the polymer to crystallize. The degree of crystallinity of molded specimens was determined by the difference in area between melting endotherm and recrystallization exotherms according to equation 1, (using PET as an Example):

$$\text{% Crystallinity of PET} = \frac{E \times \Delta A \times \Delta T\text{scale} \times T\text{scale}}{\Delta H_f(PET \times R \times W \times W_f(PET)} \times 100 \quad (1)$$

where E is an instrument correction factor, $\Delta A$ is the difference in areas, $\Delta T$scale is the vertical temperature response, Tscale is the horizontal temperature scale, $\Delta H_f(PET)$ is 113.04 J/g. (27.0 cal/g.), R is the heating rate, W is the sample weight and $W_f$ (PET) is the weight fraction of PET in the sample. The nucleation temperature $(T_n)$ was determined as the temperature where the recrystallization peak maximum occurred during 50°C/min. Cooling of a molten sample. The nucleation temperature is a measure of the efficiency of a nucleating agent. Higher numbers indicate greater efficiency. The crystallization temperature $(T_c)$ was determined as the temperature where the recrystallization maximum occurred during 20°C/min. heating of a partly amorphous molded samples. $T_c$ is a measure of oligomeric polyester efficiency; lower numbers indicate a greater enhancement of low temperature crystallization of the poly(alkylene terephthalate).

Example 1

PET (49 parts) which an intrinsic viscosity of 0.62 and 30 parts 0.48 cm (3/16") chopped glass fiber strand were dried under vacuum at 120°C for 12 hours.

Twenty one parts of a copolymer core/shell impact modifier having a polymethyl methacrylate shell polymerized in the presence of, and grafted to, a core of polybutyl acrylate were dried under vacuum at 60°C for 12 hours. The materials were mixed together and extruded in a 2.54 cm (1") single screw extruder equipped with one vacuum vent and a nitrogen blanketed feed. The extrudate was pelletized and dried again under vacuum for 6 hours at 120°C. Extruded pellets were used to obtain the rates of crystallization, nucleation temperature, and injection molding of ASTM test specimens. The material was molded on a Newbury 42.53 g (1.5-oz.) reciprocating screw injection molder with a mold temperature of 100°C and a 45-second cycle. Molded specimens were used to determine physical properties, degree of crystallinity, and crystallization temperature.

Example 2

A composition was prepared according to Example 1 with a mold temperature of 140°C and a 45-second cycle.

Example 3

A composition prepared according to Example 1 with 3% octyl/decyl (1/1 molar) terminated {ethylene adipate/phthalate (1/2)} 2.2 as oligomeric polyester added.

Example 4

A composition prepared according to Example 1 with 0.5% talc and 3% of the oligomeric polyester of Example 3 added.

Example 5

PET, with an intrinsic viscosity of 0.62 was dried under vacuum at 120°C for 12 hours. The material was extruded on a 2.03 cm (0.8") twin-screw extruder equipped with two vacuum vents and a nitrogen blanketed feed. The extrudate was pelletized and dried again under vacuum for 6 hours at 120°C. Extruded pellets were used to obtain the rates of crystallization and for injection molding of ASTM test specimens. A Newbury 42.53 g (1.5-oz.) reciprocating screw injection molder was used with a mold temperature of 100°C and a 45-second cycle. Molded specimens were used to determine physical properties, degree of crystallinity, and crystallization temperature.

Example 6

A composition prepared according to Example 5 with 1.6% talc and 5.1% of oligomeric polyester octyl/decyl (1/1 molar) terminated {ethylene adipate/phthalate (1/2)} 2.2 added.

Example 7

A composition prepared according to Example 5 with 30% of the core/shell graft copolymer impact modifier defined in Example 1 added.

Example 8

A composition prepared according to Example 5 with 28.6% of the core/shell graft copolymer impact modifier defined in Example 1, 1.1% talc, and 3.6% oligomeric polyester octyl/decyl (1/1 molar) terminated {ethylene adipate/phthalate (1/2)} 2.2 added.

Examples 1—8 in Table I show the advantages of adding both an oligomeric polyester and a nucleating agent to PET, impact-modified PET, and impact-modified, glass-reinforced PET. The crystallization half-time decreases and percent crystallinity of the PET increases without the loss of impact strength or tensile strength when the oligomeric polyesters were added. In addition, the nucleation temperature increases when a nucleating agent was added. The lowest $t_{1/2}$ values were observed when the nucleating agent and oligomeric polyester were both added.

TABLE I

| Example No. | Mold temp. (°C) | Nucleation temp. (°C) | $t_{1/2}$ (min.) at 100°C | % Crystalline | | Notched Izod | | Tensile strength | |
|---|---|---|---|---|---|---|---|---|---|
| | | | | Plaque A* | Plaque B* | Nm/cm | (ft.-lb/in) | $10^6 Nm^{-2}$ | (psi) |
| 1 (Comparative) | 100 | 177 | 100 | 18 | 36 | 1.12 | (2.1) | 98.6 | (14,300) |
| 2 (Comparative) | 140 | 177 | 100 | 36 | — | 1.07 | (2.0) | 97.22 | (14,100) |
| 3 (Comparative) | 100 | 176 | 50 | — | 38 | 1.07 | (2.0) | 96.53 | (14,000) |
| 4 | 100 | 191 | 16 | 26 | 35 | 0.91 | (1.7) | 95.84 | (13,900) |
| 5 (Comparative) | 100 | — | 43 | — | 29 | 0.27 | (0.5) | 49.64 | (7,200) |
| 6 | 100 | — | 2.4 | — | 38 | 0.16 | (0.3) | 64.81 | (9,400) |
| 7 (Comparative) | 100 | — | 88 | — | 29 | 1.23 | (2.3) | 34.47 | (5,000) |
| 8 | 100 | — | 13 | — | 37 | 0.8 | (1.5) | 29.65 | (4,300) |

\* Plaque A:— 1524 $\mu$m (60 mit).
　Plaque B:— 3175 $\mu$m (125 mit).

Example 9
A composition prepared according to Example 1 with 0.7% talc and 0.7% graphite added.

Example 10
A composition prepared according to Example 1 with 0.5% graphite and 3% oligomeric polyester octyl/decyl (1/1 molar) terminated (ethylene adipate/phthalate (1/2)} 2.2 added.

Example 11
A composition prepared according to Example 1 with 0.5% talc, 0.5% graphite, and 3% oligomeric polyester octyl/decyl (1/1 molar) terminated {ethylene adipate/phthalate (1/2)} 2.2 added.

Example 12
A composition prepared according to Example 5 with 0.8% talc, 0.8% graphite, and 5.1% of oligomeric polyester octyl/decyl (1/1 molar) terminated {ethylene adipate/phthalate (1/2)} 2.2 added.

Example 13
A composition prepared according to Example 5 with 28.6% the all acrylic core/shell graft copolymer impact modifier used in Example 1, 0.6% talc, 0.6% graphite, and 3.6% oligomeric polyester oligomeric polyester octyl/decyl (1/1 molar) terminated {ethylene adipate/phthalate (1/2)} added.

Examples 9—13 in Table II show the effect of graphite on the crystallization behavior and physical properties of PET compositions. The effect of graphite on the crystallization half time, $t_{1/2}$, is particularly surprising. A comparison of Examples 4, 6, and 8 with similar compositions in Examples 11, 12, and 13, respectively, reveals that added graphite lowers the $t_{1/2}$ in every instance.

TABLE II

| Example No. | Mold temp. (°C) | Nucleation temp. (°C) | $t_{1/2}$ (min.) at 100°C | % Crystalline | | Notched Izod | | Tensile strength | |
|---|---|---|---|---|---|---|---|---|---|
| | | | | Plaque A* | Plaque B* | Nm/cm | (ft.-lb/in) | $10^6Nm^{-2}$ | (psi) |
| 9 (Comparative) | 100 | 192 | 60 | — | 31 | 1.17 | (2.2) | —— | |
| 10 (Comparative) | 100 | 189 | 17 | — | 39 | 1.07 | (2.0) | 95.84 | (13,900) |
| 11 | 100 | 197 | 13 | 31 | 33 | 1.01 | (1.9) | 93.77 | (13,600) |
| 12 | 100 | — | 2.1 | — | 37 | 0.16 | (0.3) | 66.19 | (9,600) |
| 13 | 100 | — | 5.3 | — | 36 | 0.75 | (1.4) | 31.72 | (4,600) |

*Plaque A:— 1524 μm (60 mil).
 Plaque B:— 3175 μm (125 mil).

### Example 14

A composition prepared according to Example 1 with 5% oligomeric polyester octyl/decyl (1/1 molar) terminated [ethylene adipate/phthalate (1/2)] 2.2, 0.75% talc, and 0.75% graphite added.

### Example 15

A composition prepared according to Example 1 with 5% dibutyl phthalate, 0.75% talc, and 0.75% graphite added.

### Example 16

A composition prepared according to Example 1 with 5% dimethyl phthalate, 0.75% talc, and 0.75% graphite added.

### Example 17

A composition prepared according to Example 1 with 3% oligomeric polyester octyl/decyl (1/1 molar) terminated [ethylene adipate/phthalate (1/2)] 2.2, 0.75% talc, and 0.75% graphite added.

### Example 18

A composition prepared according to Example 1 with 3% $M_w$=4200 g/mol oligomeric polyester poly(propylene adipate), 0.75% talc, and 0.75% graphite added.

### Example 19

A composition prepared according to Example 1 with 3% Dow Corning 200 poly(dimethyl siloxane) silicone fluid, 0.75% talc, and 0.75% graphite added.

### Example 20

A composition prepared according to Example 1 except that a mixture of 17.5% by weight of an MBS impact modifier consisting of a butadiene-styrene copolymer rubbery core onto which was grafted methyl methacrylate and 3.5% of bisphenol-A-polycarbonate was substituted for the 21% impact modifier defined in Example 1.

### Example 21

A composition prepared according to Example 20 with 3.5% oligomeric polyester octyl/decyl (1/1 molar) terminated [ethylene adipate/phthalate (1/2)] 2.2, 0.75% talc, and 0.75% graphite added.

### Example 22

A composition prepared according to Example 20 with 3.5% oligomeric polyester 2-ethylhexyl terminated poly(butylene adipate) with $M_w$=3500 g/mole, 0.75% talc, and 0.75% graphite added.

### Example 23

A composition prepared according to Example 20 with 3.5% oligomeric polyester $C_{16}$—$C_{18}$ fatty acid terminated poly(propylene adipate) with $M_w$=3400, 0.75% talc, and 0.75% graphite added.

### Example 24

A composition prepared according to Example 20 with 3.5% epoxidized glycerol tri(linoleate), 0.75% talc, and 0.75% graphite added.

### Example 25

A composition prepared according to Example 20 with 3.5% of 2-ethylhexyl terminated poly(propylene sebacate) with $M_w$=7400, 0.75% talc, and 0.75% graphite added.

### Example 26

A composition prepared according to Example 20 with 3.5% of $C_6$—$C_{10}$ alcohol terminated poly(butylene adipate) with $M_w$=5000, 0.75% talc, and 0.75% graphite added.

### Example 27

A composition prepared according to Example 20 with 3.5% of $C_{14}$ fatty acid terminated poly(propylene adipate) with $M_w$=2200 g/mole, 0.75% talc, and 0.75% graphite added.

### Example 28

A composition prepared according to Example 20 with 3.5% of $C_6$—$C_{10}$ alcohol terminated poly(propylene adipate) with $M_w$=4200 g/mole, 0.75% talc, and 0.75% graphite added.

Examples 14—28, in Table III, show the importance of using an oligomeric polyester with good compatibility with the poly(alkylene terephthalate) to obtain high crystallization rates and low crystallization temperatures ($T_c$). Compatibility is defined by the Flory interaction parameter for the interaction of oligomeric polyester and the poly(alkylene terephthalate). The Flory interaction parameter was calculated from the Hildebrand solubility parameter for the oligomeric polyester and the poly(alkylene terephthalate) by assuming the solubility parameter for the latter to be $\delta$=9.85 in the case of PET, as shown in Moore et al, Polymer, *2*, 315 (1961). The following is used to calculate Flory interaction parameter:

$$X_{AB}=\frac{Vo(\delta A-\delta B)^2}{RT}$$

where $X_{AB}$ is the Flory interaction parameter, Vo is the molar volume per repeat unit in the polymer, $\delta A$ and $\delta B$ are the Hildebrand solubility parameters for the oligomeric polyester and poly(alkyleneterephthalate), R is the gas constant, and T is the absolute temperature. Hildebrand solubility parameters may be calculated by the method of Small, J. Appl. Chem., *3*, 71 (1953). Hildebrand solubility parameters can also be found in the literature, and the values used in this specification are either literature or measured values. Low Flory values indicate increased compatibility between the oligomeric polyester and the poly(alkylene terephthalate). In addition to demonstrating the need for low Flory interaction parameters between oligomeric polyester and poly(alkylene terephthalate), the data in Table III shows that high values for $T_c$ are obtained when aliphatic carboxylic acids with 10 carbon atoms are used as the major carboxylic acid portion of the oligomeric polyester.

TABLE III

| Example No. | Oligomeric polyester added | No. of carbon atoms in carboxylic acid function | Flory interaction parameter | $t_{1/2}$ (min) | $T_c(°C)$ |
|---|---|---|---|---|---|
| 14 | 5 | 8/6 | 0.011 | 8.5 | N.O* |
| 15 | 5 | 8 | 0.043 | 12.3 | 129 |
| 16 | 5 | 8 | 0.140 | 21.0 | 130 |
| 17 | 3 | 8/6 | 0.011 | 11.5 | 123 |
| 18 | 3 | 6 | 0.043 | 20.5 | — |
| 19 | 3 | 0 | 0.830 | 45.0 | 130 |
| 20 (Comparative) | 0 | — | — | 100 | 136 |
| 21 | 3.5 | 8/6 | 0.011 | 3.5 | 124 |
| 22 | 3.5 | 6 | 0.105 | — | 130 |
| 23 | 3.5 | 5 | 0.042 | — | 127 |
| 24 | 3.5 | 18 | 0.433 | — | 142 |
| 25 | 3.5 | 10 | 0.116 | — | 142 |
| 26 | 3.5 | 6 | 0.027 | — | 130 |
| 27 | 3.5 | 6 | 0.11 | 4.8 | 126 |
| 28 | 3.5 | 6 | 0.043 | — | 128 |

*Not observed—sample was completely crystallized as molded.

Example 29
A composition prepared according to Example 1 with 7% decabromobiphenyl oxide and 3% antimony trioxide added.

Example 30
A composition prepared according to Example 1 with 7% decabromobiphenyl oxide, 3% antimony oxide, 0.5% talc, 0.5% graphite, and 3% oligomeric polyester octyl/decyl (1/1 molar) terminated {ethylene adipate/phthalate (1/2)} 2.2 were added.
Examples 29 and 30, in Table IV, show that rendering the composition flame resistant does not decrease the effect of the oligomeric polyester and nucleating agents on the crystallization half-time of the poly(ethylene terephthalate).

TABLE IV

| Example No. | % Crystalline from mold 1524 $\mu$m (60 mil) plaque | $t_{1/2}$ (min.) |
|---|---|---|
| 29 | 37 | 100 |
| 30 | 44 | 16 |

Example 31 (comparative)

Four compositions prepared in accordance with Example 1 containing 0.5% talc and with 2% or 5% of pentaerithritol tetrastearate and 2% or 5% octyl/decyl (1/1 molar) terminated {ethylene adipate/phthalate (1/2)} 2.2 ("oligomeric") were compared, and the results reported in the following Table V. These examples show the advantage of this invention over the use of pentaerythritol tetrastearate ("PETS").

TABLE V

| Additive | Amount | # of carbon atoms in carboxylic acid function | Flory interaction parameter | $t_{1/2}$ (min) | $T_c$ °C |
|---|---|---|---|---|---|
| PETS | 2% | 18 | 0.42 | >100 | 133 |
| PETS | 5% | 18 | 0.42 | 40 | 133 |
| Oligomeric | 2% | 8/6 | 0.011 | 16.5 | 126 |
| Oligomeric | 5% | 8/6 | 0.011 | 9.5 | 120 |

**Claims**

1. A composition comprising (i) thermoplastic polyester of aliphatic diol and dicarboxylic acid, at least 95% mole of said acid being terephthalic acid, (ii) inert, particulate nucleating agent, and (iii) as crystallization promoter, oligomeric polyester of organic dicarboxylic acid having 2 to 8 carbon atoms and which is either exclusively aliphatic or is a mixture of aliphatic and aromatic and organic polyol, and having a Flory Interaction Parameter with said polyester below or equal to 0.2.

2. A composition as claimed in Claim 1 wherein said polyester comprises: poly(ethylene terephthalate), poly(propylene terephthalate), poly(butylene terephthalate), poly(hexylene terephthalate), poly(cyclohexylene terephthalate), and/or poly(cyclohexyl dimethylene terephthalate).

3. A composition as claimed in any preceding Claim wherein said polyester comprises: poly(ethylene terephthalate) having an intrinsic viscosity of 0.4 to 1.4 grams/deciliter measured before extrusion in a 1% solution of phenol and tetrachloroethane 60:40 at 25°C.

4. A composition as claimed in Claim 3 wherein said intrinsic viscosity is 0.6 to 0.8.

5. A composition as claimed in any preceding Claim wherein said inert, particulate nucleating agent is talc, kaolin, calcium carbonate, aluminum oxide, titanium dioxide, silica, and/or graphite.

6. A composition as claimed in any preceding Claim wherein said nucleating agent is a mixture of at least two individual nucleating agents, one of which is graphite.

7. A composition as claimed in any preceding Claim further including a core/shell impact modifier, bisphenol A polycarbonate, glass fiber reinforcement and/or flame retardant.

8. A composition as claimed in any preceding claim wherein said oligomeric polyester is derived from dicarboxylic acid and aliphatic glycol and, optionally, aromatic glycol, and has a molecular weight, $M_w$, of 700 to 10,000.

9. A composition as claimed in any preceding claim wherein said oligomeric polyester is of a glycol having 2 to 15 carbon atoms.

10. A composition as claimed in any preceding claim wherein said oligomeric polyester is terminated with an aliphatic alcohol or fatty acid having 7 to 15 carbon atoms.

11. A composition as claimed in any preceding claim wherein said oligomeric polyester comprises octyl/decyl (1/1) terminated {ethylene adiphate/phthalate (1/2)} 2.2, 2-ethyl hexyl terminated poly(butylene adipate) and poly{propylene adipate/isophthalate (3/1)}, $M_w$=2000, and/or isodecyl terminated {ethylene adipate/phthalate (1/2)} 2.7.

12. A composition as claimed in Claim 8 wherein said oligomeric polyester is fatty acid terminated or alcohol terminated.

13. A composition as claimed in Claim 8 wherein said dicarboxylic acid is a mixture of aliphatic and aromatic dicarboxylic acids.

14. A composition as claimed in Claim 5 wherein the talc has an average particle size of less than 2 microns.

15. A composition as claimed in Claim 5 or 6 wherein the graphite has an average particle size of less than or equal to 5 microns.

16. A composition as claimed in Claim 8, 9, 10, 12 or 13 wherein said organic dicarboxylic acid is exclusively aliphatic and the oligomeric polyester has a molecular weight of above 2000.

17. A moulding process wherein a composition as claimed in any preceding claim is moulded at a mould temperature below 100°C.

11

# 0 015 145

## Patentansprüche

1. Masse aus (1) einem thermoplastischen Polyester aus einem aliphatischen Diol und einer Dicarbonsäure, wobei wenigstens 95 Mol-% der Säure aus Terephthalsäure bestehen, (2) einem inerten, in Form von Einzelteilchen vorliegenden Keimbildner und (3) einem oligomeren Polyester einer organischen Dicarbonsäure mit 2 bis 8 Kohlenstoffatomen, die entweder ausschließlich aliphatisch oder eine Mischung aus aliphatisch und aromatisch ist, mit einem organischen Polyol mit einem Flory Interaction Parameter mit dem Polyester unterhalb oder gleich 0,2 als Kristallisationspromotor.

2. Masse nach Anspruch 1, dadurch gekennzeichnet, daß der Polyester aus Poly(äthyenterephthalat), Poly(propylenterephthalat), Poly(butylenterephthalat), Poly(hexylenterephthalat), Poly(cyclohexylenterephthalat), und/oder Poly(cyclohexyldimethylenterephthalat) besteht.

3. Masse nach einem der vorhergehenden Ansprüche, dadurch gekennzeichnet, daß der Polyester aus Poly(äthylenterephthalat) mit einer Intrinsikviskosität von 0,4 bis 1,4 g/dl, gemessen vor der Extrusion in einer 1 %igen Lösung von Phenol und Tetrachlorethan (60:40) bei 25°C, besteht.

4. Masse nach Anspruch 3, dadurch gekennzeichnet, daß die Intrinsikviskosität 0,6 bis 0,8 beträgt.

5. Masse nach einem der vorhergehenden Ansprüche, dadurch gekennzeichnet, daß das inerte in Form von Einzelteilchen vorliegende Keimbildungsmittel aus Talk, Kaolin, Calciumcarbonat, Aluminiumoxid, Titandioxid, Siliziumdioxid und/oder Graphit besteht.

6. Masse nach einem der vorhergehenden Ansprüche, dadurch gekennzeichnet, daß das Keimbildungsmittel eine Mischung aus wenigstens zwei einzelnen Keimbildungsmitteln ist, von denen eines aus Graphit besteht.

7. Masse nach einem der vorhergehenden Ansprüche, dadurch gekennzeichnet, daß sie ein Kern/Schale-Schlagfestigkeitsmodifizierungsmittel, bis-Phenol-A-polycarbonat, eine Glasfaserverstärkung und/oder ein flammhemmendes Mittel enthält.

8. Masse nach einem der vorhergehenden Ansprüche, dadurch gekennzeichnet, daß der oligomere Polyester auf eine Dicarbonsäure und ein aliphatisches Glykol und gegebenenfalls auf ein aromatisches Glykol zurückgeht und ein Molekulargewicht $M_w$ von 700 bis 10000 besitzt.

9. Masse nach einem der vorhergehenden Ansprüche, dadurch gekennzeichnet, daß der oligomere Polyester ein Ester eines Glykols mit 2 bis 15 Kohlenstoffatomen ist.

10. Masse nach einem der vorhergehenden Ansprüche, dadurch gekennzeichnet, daß der oligomere Polyester mit einem aliphatischen Alkohol oder einer Fettsäure mit 7 bis 15 Kohlenstoffatomen terminiert ist.

11. Masse nach einem der vorhergehenden Ansprüche, dadurch gekennzeichnet, daß der oligomere Polyester aus Octyl/Decyl (1/1) terminiertem Äthylenadipat/phthalat (1/2) 2.2, 2-Äthylhexyl-terminiertem Polybutylenadipat und Polypropylenadipat/Isophthalat (3/1), $M_w$=200, und/oder Isodecyl terminiertem Äthylenadipatphthalat (1/2) 2.7, besteht.

12. Masse nach Anspruch 8, dadurch gekennzeichnet, daß der oligomere Polyester mit einer Fettsäure oder einem Alkohol terminiert ist.

13. Masse nach Anspruch 8, dadurch gekennzeichnet, daß die Dicarbonsäure eine Mischung aus aliphatischen und aromatischen Dicarbonsäuren.

14. Masse nach Anspruch 5, dadurch gekennzeichnet, daß der Talk eine durchschnittliche Teilchengröße von weniger als 2 $\mu$ besitzt.

15. Masse nach Anspruch 5 oder 6, dadurch gekennzeichnet, daß der Graphit eine mittlere Teilchengröße von weniger als oder von gleich 5 $\mu$ besitzt.

16. Masse nach Ansrpuch 8, 9, 10, 12 oder 13, dadurch gekennzeichnet, daß die organische Dicarbonsäure ausschließlich aliphatisch ist und der oligomere Ester ein Molekulargewicht von mehr als 2000 besitzt.

17. Formverfahren, bei dessen Durchführung eine Masse gemäß einem der vorhergehenden Ansprüche bei einer Verformungstemperatur unterhalb 100°C verformt wird.

## Revendications

1. Une composition comprenant (1) un polyester thermoplastique de diol aliphatique et d'acide dicarboxylique au moins 95 mol% dudit acide étant de l'acide téréphtalique, (ii) un agent de nucléation particulaire inerte, et (iii) comme promoteur de cristallisation, un polyester oligomère d'acide dicarboxylique organique ayant 2 à 8 atomes de carbone et qui est soit exclusivement aliphatique, soit est un mélange d'aliphatique et d'aromatique, et d'un polyol organique, et ayant un paramètre d'interaction Flory avec ledit polyester inférieur ou égal à 0,2.

2. Une composition comme revendiquée dans la revendication 1, dans laquelle ledit polyester comprend: le poly(téréphtalate d'éthylène), le poly(téréphtalate de propylène), le poly(téréphtalate de butylène), le poly(téréphtalate d'hexylène), le poly(téréphtalate de cyclohexylène) et/ou le poly(téréphtalate de cyclohexyldiméthylène).

3. Une composition comme revendiquée dans l'une quelconque des revendications précédentes, dans laquelle ledit polyester comprend: du poly(téréphtalate d'éthylène) ayant une viscosité intrinsèque

12

de 0,4 à 1,4 g/dl mesurée avant l'extrusion en solution à 1% dans un mélange 60/40 de phénol et de tétrachloroéthane à 25°C.

4. Une composition comme revendiquée dans la revendication 3, dans laquelle ladite viscosité intrinsèque est de 0,6 à 0,8.

5. Une composition comme revendiquée dans l'une quelconque des revendications précédentes, dans laquelle ledit agent de nucléation particulaire inerte est le talc, le kaolin, le carbonate de calcium, l'oxyde d'aluminium, le bioxyde de titane, la silice et/ou le graphite.

6. Une composition comme revendiquée dans l'une quelconque des revendications précédentes, dans laquelle ledit agent de nucléation est un mélange d'au moins deux agents de nucléation individuels dont un est le graphite.

7. Une composition comme revendiquée dans l'une quelconque des revendications précédentes, comprenant de plus un modificateur de choc de type âme/enveloppe, un polycarbonate de bisphénol A, un renforcement de fibres de verre et/ou un retardateur de flamme.

8. Une composition comme revendiquée dans l'une quelconque des revendications précédentes, dans laquelle ledit polyester oligomère dérive d'un acide dicarboxylique et d'un glycol aliphatique et éventuellement d'un glycol aromatique et a un poids moléculaire $M_w$ de 700 à 10000.

9. Une composition comme revendiquée dans l'une quelconque des revendications précédentes, dans laquelle ledit polyester oligomère dérive d'un glycol ayant 2 à 15 atomes de carbone.

10. Une composition comme revendiquée dans l'une quelconque des revendications précédentes, dans laquelle ledit polyester oligomère est terminé avec un alcool aliphatique ou un acide gras ayant 7 à 15 atomes de carbone.

11. Une composition comme revendiquée dans l'une quelconque des revendications précédentes, dans laquelle ledit polyester oligomère comprend du [adipate/phtalate d'éthylène (1/2)] à terminaison octylique/décylique (1/1) 2,2, du poly(adipate de butylène) à terminaison 2 éthylhexylique et du poly[adipate/isophtalate de propylène (3/1)] $M_w=2000$ et/ou [adipate/phtalate d'éthylène (1/2)] à terminaison isodécylique 2,7.

12. Une composition comme revendiquée dans la revendication 8, dans laquelle ledit polyester oligomère est terminé par un acide gras ou terminé par un alcool.

13. Une composition comme revendiquée dans la revendication 8, dans laquelle ledit acide dicarboxylique est un mélange d'acides dicarboxyliques aliphatiques et aromatiques.

14. Une composition comme revendiquée dans la revendication 5, dans laquelle le talc a une taille moyenne des particules inférieure à 2 $\mu$m.

15. Une composition comme revendiquée dans la revendication 5 ou 6, dans laquelle le graphite a une taille moyenne des particules inférieure ou égale à 5 $\mu$m.

16. Une composition comme revendiquée dans les revendications 8, 9, 10, 12 ou 13, dans laquelle ledit acide organique dicarboxylique est exclusivement aliphatique et le polyester oligomère a un poids moléculaire supérieur à 2000.

17. Un procédé de moulage dans lequel une composition comme revendiquée dans l'une quelconque des revendications précédentes est moulée à une température du moule inférieure à 100°C.